# EUROPEAN PATENT APPLICATION

(11) **EP 4 113 880 A1**
(43) Date of publication of application: **04.01.2023**
(21) Application number: 20926429.0
(22) Date of filing: 24.03.2020
(51) Int. Cl.: H04L 5/00

(54) **COMMUNICATION METHOD, DEVICE AND SYSTEM, AND COMPUTER STORAGE MEDIUM**

(71) Applicant: Huawei Technologies Co., Ltd., Shenzhen, Guangdong 518129, (CN)
(72) Inventor: GAO, Lei, Shenzhen, Guangdong 518129 (CN); MA, Sha, Shenzhen, Guangdong 518129 (CN); ZHU, Jiezuo, Shenzhen, Guangdong 518129 (CN)
(74) Representative: Epping - Hermann - Fischer
(86) International application number: PCT/CN2020/080820
(87) International publication number: WO 2021/189231

(57) **Abstract**

This application discloses a communications method, apparatus, and system, and a computer storage medium, and is particularly applicable to the field of short-range communications field, for example, cockpit domain communication. A target device determines a first time-frequency sub-resource, and the first time-frequency sub-resource belongs to a first time-frequency resource. The target device sends a first request on the first time-frequency sub-resource, and the first request is used to request access or request scheduling. The first time-frequency resource is a predefined or preconfigured resource used to carry the request of the target device. Compared with a manner in which a target device uses different time-frequency resources to send an access request and a scheduling request respectively, the solution in which the target device reuses a time-frequency sub-resource in the first time-frequency resource to send the access request and/or the scheduling request can improve time-frequency resource utilization.

## Description

### TECHNICAL FIELD

This application relates to the field of wireless communications technologies, and in particular, to a communications method, apparatus, and system, and a computer storage medium, and is particularly applicable to short-range wireless communication, for example, cockpit domain communication.

### BACKGROUND

Global communications technologies are evolving rapidly. The development speed and application fields of wireless communications technologies have surpassed those of wired communications technologies, showing a vigorous development trend. For example, development and application of an in-vehicle communications technology attract more and more attention from people. Compared with the existing wired communication, in-vehicle wireless communication can further reduce a quantity, length, and weight of internal wiring harnesses of a vehicle, and corresponding installation and maintenance costs. Therefore, the in-vehicle communications technology is gradually becoming wireless. Diversification of in-vehicle applications leads to an increasing quantity and types of in-vehicle communications nodes, and imposes a higher requirement on an in-vehicle communication capability.

In many wireless communications scenarios, a plurality of communications nodes communicate with each other by using a communications domain. There may be one or more communications domains in a specific communications area or range. The communications domain is a system including: a group of communications nodes that have a communications relationship, and the communications connection relationship (that is, a communications link) between the communications nodes. One communications domain includes one primary communications node (which may be referred to as a primary node for short) and at least one secondary communications node (which may be referred to as a secondary node for short). The primary node manages time-frequency resources of the communications domain, and has a function of scheduling a resource for the communications link between the primary and secondary nodes. The time-frequency resources managed by the primary node include: an access request resource, a scheduling request resource, and a resource used to transmit other control signaling and/or service data. The access request resource is used by a node that does not belong to the communications domain (which may be referred to as an external node for short) to send an access request to the primary node in the communications domain, and the access request is used to request to initiate a process of joining the communications domain by the external node. The scheduling request resource is used by the secondary node to send a scheduling request (scheduling request, SR) to the primary node, the scheduling request is used to request the primary node to allocate resources, and the resources are used to transmit control signaling and/or service data between the primary node and the secondary node. Generally, the primary node allocates respective scheduling request resources to secondary nodes.

However, because a frequency of sending an access request by the external node and a frequency of sending a scheduling request by the secondary node are usually relatively low, access request resource utilization and scheduling request resource utilization are usually relatively low currently, resulting in relatively low overall time-frequency resource utilization.

### SUMMARY

This application provides a communications method, apparatus, and system, and a computer storage medium, to resolve a problem of relatively low overall time-frequency resource utilization in a related technology.

According to a first aspect, a communications method is provided. The method includes: A target device determines a first time-frequency sub-resource, where the first time-frequency sub-resource belongs to a first time-frequency resource. The target device sends a first request on the first time-frequency sub-resource, where the first request is used to request access or request scheduling. The first time-frequency resource is a predefined or preconfigured resource used to carry requests of the target device. The requests of the target device include a request used to request access and a request used to request scheduling. The target device is an external node or a secondary node in a communications domain. In this embodiment of this application, the request used to request access is referred to as an access request, and the request used to request scheduling is referred to as a scheduling request. The external node means a device that currently does not belong to the communications domain, including a device that has not joined the communications domain and a device that has joined the communications domain and then exited the communications domain.

Optionally, the method includes: A target device determines a first time-frequency sub-resource, where the first time-frequency sub-resource belongs to a first time-frequency resource. The target device sends an access request or a scheduling request on the first time-frequency sub-resource. The first time-frequency resource is a predefined or preconfigured resource used to carry an access request and a scheduling request of at least one target device. In this application, the access request is used in a process in which the external node requests to join the communications domain in which a primary node is located (that is, used to request access). The scheduling request is used by a secondary node to request the primary node to allocate resources (that is, used to request scheduling), and the resources are used to transmit control signaling and/or service data between the primary node and the secondary node. The target device and the communications domain are in different relationships when the target device sends the access request and the scheduling request. For example, the target device does not belong to the communications domain when sending the access request, and is an external node for the communications domain; and the target device is a secondary node in the communications domain when sending the scheduling request.

In this application, the target device reuses the first time-frequency resource to send the access request and/or the scheduling request. Compared with a manner in which a target device uses different time-frequency resources to send an access request and a scheduling request respectively, the solution in this application improves time-frequency resource utilization, and there is no need to separately configure or define resources for the access request and the scheduling request.

Optionally, the first time-frequency resource is used to carry requests of a plurality of target devices. In other words, the plurality of target devices may send an access request and/or a scheduling request on the first time-frequency resource.

In this application, the plurality of target devices reuse the first time-frequency resource to send the access request and/or the scheduling request. Compared with a manner in which a target device uses different time-frequency resources to send an access request and a scheduling request, and different target devices use different time-frequency resources to send scheduling requests, the solution in this application can improve time-frequency resource utilization, and there is no need to separately configure or define resources for the scheduling request corresponding to each target device and the access request.

Optionally, the first request is used to request access (that is, the first request is an access request), and the first request includes a first identity. The method further includes: The target device sends a second request on a second time-frequency sub-resource, where the second request is used to request scheduling (that is, the second request is a scheduling request). The second time-frequency sub-resource belongs to the first time-frequency resource, the second request includes a second identity, and the second identity is different from the first identity. The first identity is used to indicate that the device sending the first request is an external node in the communications system, and the first request is an access request. In other words, the first identity is used to indicate that the external node requests to access the primary node or access the communications domain in which the primary node is located. The second identity is used to indicate that the device that sends the second request is a secondary node in the communications domain, and the second identity uniquely identifies, in the communications domain, the device that sends the second request.

In this application, the communications system reserves one or more reserved identities. The reserved identities are different from the second identity, but the first identity is definitely a reserved identity, to ensure that the second identity is different from the first identity. Whether a type of the request is an access request may be distinguished based on whether the identity included in the request is the reserved identity. In addition, if the first request is a scheduling request, because the second identity uniquely identifies, in the communications domain, the device that sends the scheduling request, the primary node in the communications domain may determine, based on the second identity included in the scheduling request, the device that sends the scheduling request. Optionally, the one or more reserved identities may be predefined, for example, defined in a standard or a protocol, or preconfigured, for example, preconfigured by the primary node.

Optionally, the first request is used to request access, and the first request includes the first identity. The method further includes: The target device receives a broadcast message, where the broadcast message includes information about one or more reserved identities, and the first identity belongs to the one or more reserved identities.

The first time-frequency resource may be predefined or preconfigured. That the first time-frequency resource is predefined includes: The first time-frequency resource is defined in a standard or a protocol. That the first time-frequency resource is preconfigured includes: The first time-frequency resource is preconfigured by using a broadcast message by the primary node in the communications domain. Optionally, the first time-frequency resource is preconfigured. The method further includes: The target device receives a broadcast message, where the broadcast message includes configuration information of the first time-frequency resource.

In this application, the first time-frequency resource is predefined in a standard or a protocol, so that an implementation mechanism is simple. Alternatively, the primary node preconfigures the first time-frequency resource, so that flexibility is high and application scenarios are relatively rich.

Optionally, the broadcast message is a system message.

In this application, when both the reserved identity and the first time-frequency resource are allocated by the primary node, the primary node may add the information about the one or more reserved identities and the configuration information of the first time-frequency resource to one broadcast message for sending. Alternatively, the primary node may add the information about the one or more reserved identities to one broadcast message for sending, and add the configuration information of the first time-frequency resource to another broadcast message for sending. In other words, the primary node adds the information about the reserved identity and the configuration information of the first time-frequency resource respectively to two broadcast messages. This is not limited in this application.

Optionally, the first request is used to request access. The method further includes: The target device receives a target message, where the target message includes information about the second identity, the second identity is carried in the second request, and the second request is used to request scheduling. The second identity is used to uniquely identify the target device in the communications domain.

Optionally, the target message is an access response (that is, a response to the access quest), the access response is received by using a second time-frequency resource, and the second time-frequency resource is determined based on the first time-frequency sub-resource.

In this application, the target device sends the access request on the first time-frequency sub-resource, and may determine, based on the first time-frequency sub-resource, the second time-frequency resource used to receive the access response. Optionally, an acknowledgment resource corresponding to each time-frequency sub-resource in the first time-frequency resource is predefined in a standard or a protocol, or may be preconfigured by the primary node. The target device may determine, based on a definition in the standard or the protocol or the configuration of the primary node, the acknowledgment resource that corresponds to the first time-frequency sub-resource is the second time-frequency resource.

Optionally, the first request is used to request scheduling (that is, the first request is a scheduling request). The method further includes: The target device receives a scheduling response by using a third time-frequency resource, where the scheduling response includes configuration information of a fourth time-frequency resource, and the fourth time-frequency resource is used to transmit service data and/or control information. The scheduling response may include the second identity. The second identity is used to indicate that the scheduling response is a response to the scheduling request sent by the target device.

Optionally, the third time-frequency resource is determined based on the first time-frequency sub-resource; alternatively, the third time-frequency resource is determined based on the first time-frequency sub-resource and a scheduling type of the first request. Because processing times needed for scheduling responses of different scheduling types and quantities of resources needed for transmitting the scheduling responses may be different, acknowledgment resources that need to be used to transmit the scheduling responses of the different scheduling types are also different.

Therefore, in this application, the third time-frequency resource may be determined based on the first time-frequency sub-resource and the scheduling type of the first request.

In this application, the target device sends the scheduling request on the first time-frequency sub-resource, and may determine, based on the first time-frequency sub-resource, the third time-frequency resource used to receive the scheduling response. Optionally, the acknowledgment resource corresponding to each time-frequency sub-resource in the first time-frequency resource is predefined in the standard or the protocol, or may be preconfigured by the primary node. The target device may determine, based on a definition in the standard or the protocol or the configuration of the primary node, the acknowledgment resource that corresponds to the first time-frequency sub-resource is the third time-frequency resource.

According to a second aspect, a communications method is provided. The method includes: A first device receives a first request on a first time-frequency sub-resource, where the first request is used to request access or request scheduling, and the first time-frequency sub-resource belongs to a first time-frequency resource. The first time-frequency resource is a predefined or preconfigured resource used to carry requests of a target device, and the requests of the target device include a request used to request access and a request used to request scheduling. The first device is a primary node in a communications domain, and the target device is an external node or a secondary node in the communications domain.

Optionally, the first device receives a second request on a second time-frequency sub-resource, where the second request is used to request access or request scheduling, and the second time-frequency sub-resource belongs to the first time-frequency resource. The first request and the second request may be from different devices. In other words, the first time-frequency resource may be used to carry requests of a plurality of target devices.

Optionally, the first request is used to request access, and the first request includes a first identity. The method further includes: The first device receives the second request on the second time-frequency sub-resource, where the second request is used to request scheduling, the second time-frequency sub-resource belongs to the first time-frequency resource, the second request includes a second identity, and the second identity is different from the first identity. The first device determines, based on the second identity in the second request, that a device that sends the second request is a secondary node in the communications domain.

Optionally, the first request is used to request access, and the first request includes the first identity. The method further includes: The first device sends a broadcast message, where the broadcast message includes information about one or more reserved identities, and the first identity belongs to the one or more reserved identities.

Optionally, the method further includes: The first device sends a broadcast message, where the broadcast message includes configuration information of the first time-frequency resource.

Optionally, the broadcast message is a system message.

Optionally, the first request is used to request access. The method further includes: The first device sends a target message, where the target message includes information about the second identity, the second identity is carried in the second request, and the second request is used to request scheduling.

Optionally, the target message is an access response, the access response is sent by using a second time-frequency resource, and the second time-frequency resource is determined based on the first time-frequency sub-resource.

Optionally, the first request is used to request scheduling. The method further includes: The first device generates a scheduling response based on the first request; and the first device sends the scheduling response by using a third time-frequency resource. The scheduling response includes configuration information of a fourth time-frequency resource, and the fourth time-frequency resource is used to transmit service data and/or control information. Optionally, the third time-frequency resource is determined based on the first time-frequency sub-resource; alternatively, the third time-frequency resource is determined based on the first time-frequency sub-resource and a scheduling type of the first request.

According to a third aspect, a communications apparatus is provided. The apparatus includes a plurality of function modules. The plurality of functional modules interact with each other to implement the method according to the first aspect and the implementations of the first aspect. The plurality of function modules may be implemented based on software, hardware, or a combination of software and hardware, and the plurality of function modules may be randomly combined or divided based on specific implementation.

According to a fourth aspect, a communications apparatus is provided. The apparatus includes a plurality of function modules, and the plurality of function modules interact with each other to implement the method in the second aspect and the implementations of the second aspect. The plurality of function modules may be implemented based on software, hardware, or a combination of software and hardware, and the plurality of function modules may be randomly combined or divided based on specific implementation.

According to a fifth aspect, a communications apparatus is provided, including: a processor, a memory, and a transceiver.

The memory is configured to store a computer program, where the computer program includes program instructions. The processor is configured to invoke the computer program to implement the communications method according to any one of the first aspect in collaboration with the transceiver.

According to a sixth aspect, a communications apparatus is provided, including: a processor, a memory, and a transceiver.

The memory is configured to store a computer program, where the computer program includes program instructions. The processor is configured to invoke the computer program to implement the communications method according to any one of the second aspect in collaboration with the transceiver.

According to a seventh aspect, a communications system is provided, including: a first device and a second device, where the first device is a primary communications and the second device is a secondary communications node or an external node.

The first device includes the communications apparatus according to the fourth aspect or the sixth aspect.

The second device includes the communications apparatus according to the third aspect or the fifth aspect. According to an eighth aspect, a computer storage medium is provided. The computer storage medium stores instructions. When the instructions are executed by a processor of a computer device, the communications method according to any one of the first aspect or the second aspect is implemented.

According to a ninth aspect, a chip is provided. The chip includes a programmable logic circuit and/or program instructions. When the chip is run, the communications method according to any one of the first aspect or the second aspect is implemented.

The technical solutions provided in this application include at least the following beneficial effects.

In this application, a same time-frequency resource is used to carry an access request and a scheduling request of one or more devices. Compared with a manner in which a device uses different time-frequency resources to send an access request and a scheduling request respectively, the solution in which the device sends the access request and/or the scheduling request by reusing a same time-frequency resource improves time-frequency resource utilization. Compared with a manner in which different devices use different time-frequency resources to send scheduling requests, the solution in which a plurality of devices send scheduling requests by reusing a same time-frequency resource improves time-frequency resource utilization. In addition, the plurality of devices contend for using a same time-frequency resource, so that there is no need to separately design different time-frequency resources for an access request and a scheduling request corresponding to each device. This simplifies a communications mechanism

### BRIEF DESCRIPTION OF DRAWINGS

FIG. 1 is a schematic diagram of a structure of a communications system according to an embodiment of this application;
FIG. 2 is a schematic diagram of a structure of another communications system according to an embodiment of this application;
FIG. 3 is a schematic flowchart of a communications method according to an embodiment of this application;
FIG. 4 is a schematic diagram of a first time-frequency resource according to an embodiment of this application;
FIG. 5 is a schematic flowchart of another communications method according to an embodiment of this application;
FIG. 6 is a schematic flowchart of still another communications method according to an embodiment of this application;
FIG. 7 is a schematic diagram of a structure of a communications apparatus according to an embodiment of this application;
FIG. 8 is a schematic diagram of a structure of another communications apparatus according to an embodiment of this application;
FIG. 9 is a schematic diagram of a structure of still another communications apparatus according to an embodiment of this application;
FIG. 10 is a schematic diagram of a structure of yet another communications apparatus according to an embodiment of this application; and
FIG. 11 is a block diagram of a communications apparatus according to an embodiment of this application.

### DESCRIPTION OF EMBODIMENTS

To make objectives, technical solutions, and advantages of this application clearer, the following further describes implementations of this application in detail with reference to accompanying drawings.

An embodiment of this application provides a communications system The communications system includes one or more communications domains. Each communications domain includes one primary communications node (primary node for short) and one or more secondary communications nodes (secondary node for short). Each secondary node in the communications domain establishes a communications link to the primary node. A secondary node in one communications domain may serve as a primary node in another communications domain. Optionally, the communications system further includes an external node. The external node means a node that has not joined any communications domain in the communications system In other words, the external node has not established a communications link to a primary node in any communications domain in the communications system, that is, the external node currently does not belong to the communications domain. The primary node manages time-frequency resources of a communications domain, and has a function of scheduling a resource for the communications link between the primary node and the secondary node. The time-frequency resources managed by the primary node include: an access request resource, a scheduling request resource, and a resource used to transmit other control signaling and/or service data. The access request resource is used by the external node to send an access request to the primary node in the communications domain, and the access request is used to request to initiate a process of joining the communications domain by the external node. The scheduling request resource is used by the secondary node to send a scheduling request to the primary node, the scheduling request is used to request the primary node to allocate resources, and the resources are used to transmit control signaling and/or service data between the primary node and the secondary node.

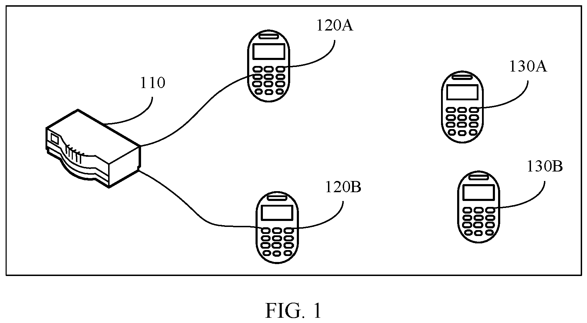

Optionally, FIG. 1 is a schematic diagram of a structure of a communications system according to an embodiment of this application. As shown in FIG. 1, the communications system includes a first device 110, second devices 120A and 120B (collectively referred to as a second device 120), and third devices 130A and 130B (collectively referred to as a third device 130). The first device 110 is a primary node in a communications domain, the second devices 120 is a secondary node in the communications domain, and the third device 130 is an external node. Quantities of second devices and third devices in FIG. 1 are merely used as an example, and are not intended to limit the communications system provided in this embodiment of this application. For example, the quantity of third devices may alternatively be 0, that is, the communications system does not include the third device.

Optionally, the communications system provided in this embodiment of this application may be applied to a wireless network such as an in-vehicle network, a wireless local area network (wireless local area network, WLAN), or a cellular network. When the communications system is applied to the in-vehicle network, the first device 110 may be a cockpit domain controller (cockpit domain controller, CDC), and the second device 120 and the third device 130 may be terminals such as microphones, sound boxes, or mobile phones; alternatively, the first device 110 may be a passive entry passive start (passive entry passive start, PEPS), and the second device 120 and the third device 130 may be mobile keys, car keys, or the like; alternatively, the first device 110 may be a mobile phone, and the second device 120 and the third device 130 may be headsets, wearable devices, or the like. When the communications system is applied to the WLAN, the first device 110 may be an access point (access point, AP), and the second device 120 and the third device 130 may be stations (station, STA). When the communications system is applied to the cellular network, the first device 110 may be a base station, and the second device and the third device may be user equipments (user equipment, UE).

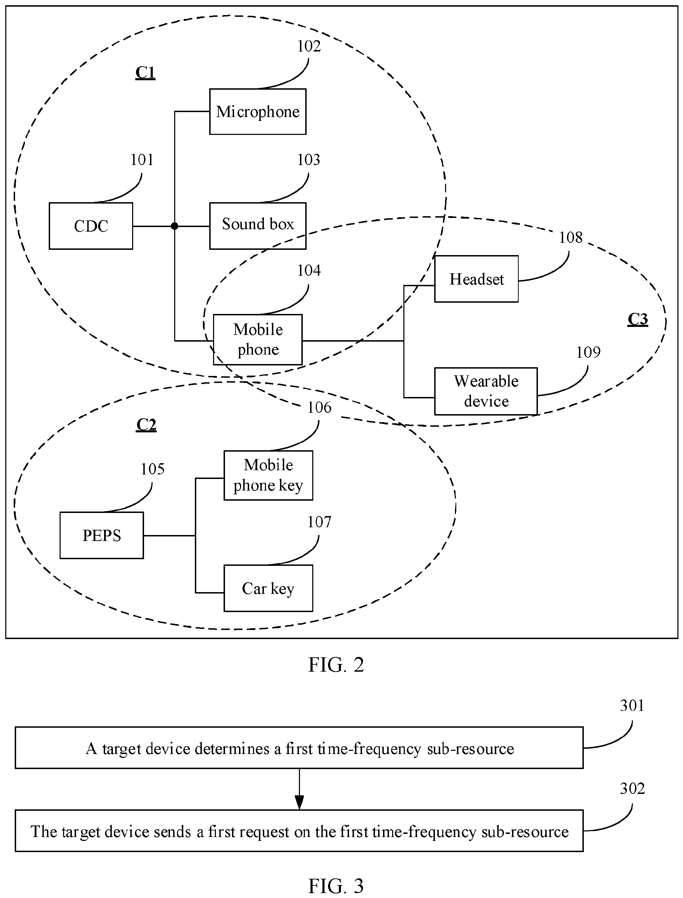

In embodiments of this application, an example in which the communications system is applied to the in-vehicle network is used for description. For example, FIG. 2 is a schematic diagram of a structure of another communications system according to an embodiment of this application. As shown in FIG. 2, the communications system includes three communications domains C1 to C3.

The communications domain C1 includes a CDC 101, a microphone 102, a sound box 103, and a mobile phone 104. The CDC 101 is a primary node, and the microphone 102, the sound box 103, and the mobile phone 104 are all secondary nodes. The microphone 102, the sound box 103, and the mobile phone 104 are separately connected to the CDC 101 in a wireless manner. The CDC 101 may be further connected to a display of an in-vehicle system in a wired manner.

The communications domain C2 includes a PEPS 105, a mobile phone key 106, and a car key 107. The PEPS 105 is a primary node, and both the mobile phone key 106 and the car key 107 are secondary nodes. The mobile phone key 106 and the car key 107 are separately connected to the PEPS 105 in a wireless manner. The PEPS 105 may further be connected to a body control module (body control module, BCM) in a wired manner.

The communications domain C3 includes a mobile phone 104, a headset 108, and a wearable device 109. The mobile phone 104 is a primary node, and both the headset 108 and the wearable device 109 are secondary nodes. The headset 108 and the wearable device 109 are separately connected to the mobile phone 104 in a wireless manner.

In the communications system shown in FIG. 2, the mobile phone 104 is both a secondary node in the communications domain C1 and the primary node in the communications domain C3.

In an in-vehicle network, a frequency of sending an access request by an external node to a primary node is relatively low, and a frequency of sending a scheduling request by a secondary node to the primary node is also relatively low. A scenario in which the external node sends the access request to the primary node includes: When a mobile phone key or a car key approaches or enters a vehicle, an access request is sent to a PEPS; and when a device such as a sound box or a microphone in the vehicle is manually turned on or the mobile phone intends to access a CDC, an access request is sent to the CDC. Because a frequency of occurrence of these events is relatively low, the frequency of sending the access request by the external node to the primary node in the in-vehicle network is relatively low. A scenario in which a secondary node sends a scheduling request to the primary node includes: When the secondary node needs to initiate a new service or initiate a semi-persistent scheduling (semi-persistent scheduling, SPS) service change, the secondary node sends a scheduling request to the primary node. Services in the in-vehicle network include main services and a few burst services. A traffic volume of the main services is stable. Generally, an SPS mode is used for scheduling, and new services do not need to be initiated frequently. The burst services occur at random Generally, dynamic scheduling is used. Because a traffic volume of the burst services is small, new services are not frequently initiated either. Therefore, a frequency that the secondary node triggers sending the scheduling request because the secondary node needs to initiate a new service is relatively low. The SPS service change is generally caused by a change in a traffic volume or a change in a modulation and coding scheme (modulation and coding scheme, MCS) due to a change in a channel condition. Because a distance between nodes in a vehicle is short and a relative motion is slow, a wireless channel in the in-vehicle network is characterized by flat frequency domain and slow time domain transformation, that is, the channel condition is relatively stable. Therefore, a frequency that the secondary node triggers sending the scheduling request because the secondary node needs to initiate an SPS service is relatively low. Currently, a group of time-frequency resources are allocated for an external node to send an access request, and a group of time-frequency resources are allocated to each secondary node for the corresponding secondary node to send a scheduling request. That is, time-frequency resources used to bear the access request and the scheduling request are different, and time-frequency resources used to bear scheduling requests sent by different secondary nodes are also different. Because a frequency of sending the access request by the external node and a frequency of sending the scheduling request by the secondary node are relatively low, overall time-frequency resource utilization is relatively low currently. However, in communications methods provided in embodiments of this application, a same group of time-frequency resources carry a request used to request access (that is, an access request) and a request used to request scheduling (that is, a scheduling request). Because the access request and the scheduling request are carried in the same group of time-frequency resources, time-frequency resource utilization is improved. In addition, in embodiments of this application, a plurality of devices may share a same group of time-frequency resources to send scheduling requests. This further improves time-frequency resource utilization.

FIG. 3 is a schematic flowchart of a communications method according to an embodiment of this application. The method may be applied to the communications system shown in FIG. 1 or FIG. 2. As shown in FIG. 3, the method includes the following steps.

Step 301: A target device determines a first time-frequency sub-resource.

The first time-frequency sub-resource belongs to a first time-frequency resource. The first time-frequency resource is a predefined or preconfigured resource used to carry requests of the target device. The requests of the target device include a request used to request access and a request used to request scheduling. It should be noted that the first time-frequency resource mentioned in this embodiment of this application is not used to transmit service data, and is not all resources available to the target device. In this embodiment of this application, the request used to request access is referred to as an access request, and the request used to request scheduling is referred to as a scheduling request. Optionally, the target device is a secondary node or an external node in a communications system For example, the target device may be the second device 120 or the third device 130 in the communications system shown in FIG. 1. That the first time-frequency resource is predefined includes: The first time-frequency resource is defined in a standard or a protocol. That the first time-frequency resource is preconfigured includes: The first time-frequency resource is preconfigured by using a broadcast message by a first device. The first device is a primary node in the communications system For example, the first device may be the first device 110 in the communications system shown in FIG. 1. The first time-frequency resource is a resource used to carry the requests of the target device. In other words, the first time-frequency resource is used to carry the access request and the scheduling request of the target device. The access request is used to request to access the first device, the scheduling request is used to request a scheduling request resource from the first device, and the scheduling request resource is used by the target device to transmit service data and/or control information.

Optionally, the first time-frequency resource is preconfigured by the first device. The first device sends a broadcast message in the communications system For example, the first device may periodically send a broadcast message in the communications system, and the broadcast message includes configuration information of the first time-frequency resource. After receiving the broadcast message, the target device determines the first time-frequency sub-resource in the first time-frequency resource. The first time-frequency resource includes one or more time-frequency sub-resources. Optionally, when the first time-frequency resource includes a plurality of time-frequency sub-resources, the target device may determine any time-frequency sub-resource in the first time-frequency resource as the first time-frequency sub-resource. In other words, the first time-frequency sub-resource may be any time-frequency resource in the first time-frequency resource. Alternatively, the target device may determine the 1^{st} time-frequency sub-resource in the first time-frequency resource as the first time-frequency sub-resource. In other words, the first time-frequency sub-resource may be the 1^{st} time-frequency sub-resource in the first time-frequency resource. A manner of determining the first time-frequency sub-resource in the first time-frequency resource is not limited in this embodiment of this application. Optionally, the broadcast message is a system message.

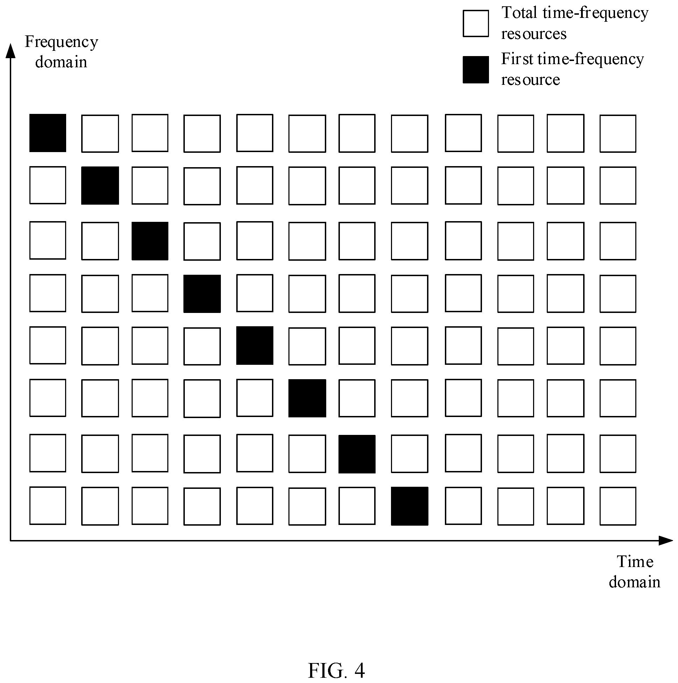

The configuration information of the first time-frequency resource includes time domain information and frequency domain information of each time-frequency sub-resource in the first time-frequency resource. In this embodiment of this application, one time-frequency sub-resource may be correspondingly an orthogonal frequency division multiplexing (orthogonal frequency division multiplexing, OFDM) symbol in time domain, and may be correspondingly a subcarrier in frequency domain. In other words, one time-frequency sub-resource may include one OFDM symbol and one subcarrier. A time-frequency resource is usually a periodic resource. A time-frequency sub-resource in the first time-frequency resource may include an i^{th} OFDM symbol and a j^{th} subcarrier in one period, where both i and j are positive integers, i is less than or equal to a total quantity of OFDM symbols in one period, and j is less than or equal to a total quantity of subcarriers in one period. Optionally, the configuration information of the first time-frequency resource is {(i₁, j₁); (i₂, j₂);...; (iₙ, jₙ)}, indicating that the first time-frequency resource includes n time-frequency sub-resources, iₙ indicates that the n^{th} time-frequency sub-resource is the iₙ^{th} OFDM symbol in time domain, and jₙ indicates that the n^{th} time-frequency sub-resource is the jₙ^{th} subcarrier in frequency domain, where n is a positive integer, and n is less than or equal to a product of a total quantity of OFDM symbols in one period and a total quantity of subcarriers in one period. For example, FIG. 4 is a schematic diagram of a first time-frequency resource according to an embodiment of this application. A horizontal coordinate represents time domain, a vertical coordinate represents frequency domain, and each time-frequency sub-resource corresponds to one small block. As shown in FIG. 4, a total time-frequency resource includes a plurality of time-frequency sub-resources arranged in a matrix shape, and the first time-frequency resource includes a plurality of time-frequency sub-resources in the matrix.

In this embodiment of this application, the first time-frequency resource is predefined in a standard or a protocol, so that an implementation mechanism is simple. Alternatively, a primary node preconfigures the first time-frequency resource, so that flexibility is high and application scenarios are relatively rich.

Optionally, the first time-frequency resource is used to carry requests of a plurality of target devices. The plurality of target devices may be located in one communications domain of a communications system, or may be located in different communications domains of the communications system In this embodiment of this application, a plurality of target devices reuse the first time-frequency resource to send an access request and/or a scheduling request. Compared with a manner in which a target device uses different time-frequency resources to send an access request and a scheduling request respectively, and different target devices use different time-frequency resources to send scheduling requests, the solution in this embodiment can improve time-frequency resource utilization, and there is no need to separately configure or define resources for the scheduling request corresponding to each target device and the access request.

Optionally, the first time-frequency resource may be further used to carry another request other than the access request and the scheduling request, for example, a request used to request to obtain system information or a request used to request to obtain channel information. This is not limited in this embodiment of this application.

Step 302: The target device sends a first request on the first time-frequency sub-resource.

Correspondingly, the first device receives the first request on the first time-frequency sub-resource. After receiving the first request, the first device may determine at least one of a request type of the first request, a node sending the first request, a node type, or the like. The first request is used to request access or request scheduling. In other words, the first request is an access request or a scheduling request. When the target device is an external node in the communications system, the first request is an access request, and is used to request to access the first device. In other words, the first request is used to request to establish a communications link to the first device. When the target device is a secondary node in a communications domain in which the first device is located, the first request is a scheduling request, and is used to request a scheduling request resource from the first device. The scheduling request resource is a time-frequency resource used to transmit service data and/or control information. The control information includes but is not limited to a service change instruction, an MCS change instruction, scheduling signaling, and channel quality indication information.

In this embodiment of this application, the target device reuses the first time-frequency resource to send the access request and/or the scheduling request. Compared with a manner in which a target device uses different time-frequency resources to send an access request and a scheduling request respectively, the solution in this embodiment improves time-frequency resource utilization, and there is no need to separately configure or define resources for the scheduling request and the access request.

Optionally, the access request includes a first identity (identity, ID). The scheduling request includes a second identity. The second identity is different from the first identity. The first identity is used to indicate that the device sending the request is an external node in the communications system, and the request is an access request. In other words, the first identity is used to indicate that the external node requests to access the primary node or access the communications domain in which the primary node is located. The second identity is used to indicate that the device that sends the request is a secondary node in the communications domain, and the second identity uniquely identifies, in the communications domain, the device that sends the request.

In this embodiment of this application, the communications system reserves one or more reserved identities. The reserved identities are different from the second identity, but the first identity is definitely a reserved identity, to ensure that the second identity is different from the first identity. Whether the type of the request is the access request may be distinguished based on whether the identity included in the request is the reserved identity. In addition, if the first request is the scheduling request, because the second identity uniquely identifies, in the communications domain, the device that sends the scheduling request, the first device (that is, the primary node in the communications domain) may determine, based on the second identity included in the scheduling request, the device that sends the scheduling request.

Both the reserved identity and the second identity may be allocated by the first device. For example, the first device preconfigures one or more reserved identities. Alternatively, the reserved identity may be defined in a standard or a protocol, and the second identity is allocated by the first device. When the reserved identity is defined in the standard or the protocol, the external node obtains one of the one or more reserved identities defined by the standard or the protocol, and adds the reserved identity to the access request as the first identity.

For example, the reserved identity and the second identity provided in this embodiment of this application may be shown in Table 1, where n is a positive integer, and m is an integer greater than n.

**Table 1**

| | |
|---|---|
| Reserved identity | ID 1 |
| | ID 2 |
| | ... |
| | ID n |
| Second identity | ID n+1 |
| | ID n+2 |
| | ... |
| | ID m |

Refer to Table 1. The first device or the protocol reserves n reserved identities that are respectively ID 1 to ID n. The first device allocates one second identity to each of the (m-n) secondary nodes that access the first device, where the second identities are ID n+1 to ID m. The second identity may be a MAC address of the secondary node, or the second identity may be determined by the first device, for example, may be a letter, a digit, a character, or a combination thereof, and is used to uniquely identify a device in the communications domain in which the first device is located. Optionally, the reserved identity is allocated by the first device. The first device sends the broadcast message in the communications system For example, the first device may periodically send the broadcast message in the communications system, and the broadcast message includes information about the one or more reserved identities. The information about the reserved identity may be the reserved identity, or may be indication information of the reserved identity. The reserved identity can be obtained by using the indication information. After receiving the broadcast message, the target device obtains one reserved identity from the one or more reserved identities as the first identity. In other words, the first identity belongs to the one or more reserved identities.

Optionally, the broadcast message is a system message. In this embodiment of this application, the broadcast message is a message sent in a broadcast manner. The system message is a message that is sent in a broadcast manner and that includes a system configuration. In other words, the system message is a broadcast message. Alternatively, the broadcast message may be another message sent in a broadcast manner other than the system message. This is not limited in this embodiment of this application.

In this embodiment of this application, when both the reserved identity and the configuration information of the first time-frequency resource are allocated by the first device, the first device may add the information about the one or more reserved identities and the configuration information of the first time-frequency resource to one broadcast message for sending. Alternatively, the first device may add the information about the one or more reserved identities to one broadcast message for sending, and add the configuration information of the first time-frequency resource to another broadcast message for sending. In other words, the first device adds the information about the reserved identity and the configuration information of the first time-frequency resource respectively to two broadcast messages. This is not limited in this embodiment of this application.

The first device allocates a second identity to each target device that accesses the first device. Optionally, after receiving the access request sent by the target device, the first device may send a target message to the target device, and the target message includes information about the second identity. Optionally, the first device may allocate the second identity to the target device in a process in which the target device accesses the first device (that is, the target device joins the communications domain in which the first device is the primary node). The target message may be a response to the access request (that is, an access response). Alternatively, the target message may not be an access response. After receiving the access request sent by the target device, the first device may reply with a target message that is used to carry only the information about the second identity. For example, after determining that the target device successfully accesses the first device, the first device sends, to the target device, the target message that carries the second identity.

In this embodiment of this application, various types of information is carried in a message for transmission. For example, the configuration information of the first time-frequency resource is carried in a broadcast message for transmission, the information about the reserved identity is carried in the broadcast message for transmission, and the information about the second identity allocated by the first device to the secondary node is carried in the target message for transmission. The message related to this embodiment of this application may include a header and/or a data field of a protocol data unit (protocol data unit, PDU). In other words, the message may be a data packet including only a data field, or the message may be a PDU header, or may include a PDU header and a data field. Alternatively, the message may be a signal carrying information. For example, the message may be a signal including a time domain sequence, and information carried in the signal is indicated by using a cyclic shift of the sequence. A type of the message is not limited in this embodiment of this application.

Optionally, this application provides the following two optional embodiments. An example in which the target device is the external node and the secondary node in the communications system is used to describe implementation processes of the communications method.

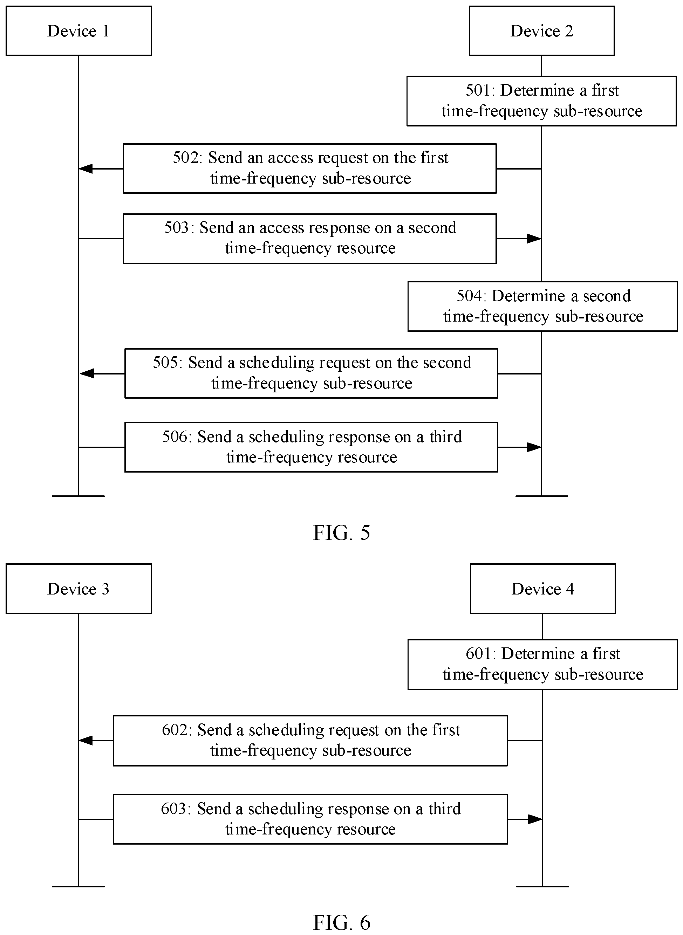

In a first optional embodiment of this application, the target device is the external node in the communications system, and the first request is the access request. FIG. 5 is a schematic flowchart of another communications method according to an embodiment of this application. A communications system to which the method is applied includes at least a device 1 and a device 2, where the device 1 is a primary node, and the device 2 is an external node. For example, the device 1 may be the first device 110 in the communications system shown in FIG. 1, and the device 2 may be the third device 130 in the communications system shown in FIG. 1. The method may be specifically used to perform the method shown in the embodiment corresponding to FIG. 3. For example, the device 1 may be the first device, and the device 2 may be the target device. As shown in FIG. 5, the method includes the following steps.

Step 501: The device 2 determines a first time-frequency sub-resource.

The first time-frequency sub-resource belongs to a first time-frequency resource. For a process in which the device 2 determines the first time-frequency sub-resource, refer to the process in which the target device determines the first time-frequency sub-resource in step 301. Details are not described herein in this embodiment of this application again. Step 502: The device 2 sends an access request on the first time-frequency sub-resource.

Optionally, the access request includes a first identity (identity, ID). The first identity is used to indicate that the device 2 is an external node and indicate that a request type of the sent request is an access request.

In this embodiment of this application, the device 1 attempts to receive a request on each time-frequency sub-resource of the first time-frequency resource. The device 2 sends the access request on the first time-frequency sub-resource, and the device 1 may receive the access request on the first time-frequency sub-resource. Optionally, the first time-frequency sub-resource is any time-frequency sub-resource in the first time-frequency resource. The device 2 sends the access request on the first time-frequency sub-resource in a contention manner. To be specific, the device 2 first attempts to send the access request on the first time-frequency sub-resource. If the device 2 fails to send the access request on the first time-frequency sub-resource, for example, the device 2 determines that the first time-frequency sub-resource is busy or the device 2 fails to access the device 1, the device 2 determines a new time-frequency sub-resource in the first time-frequency resource and attempts to send the access request again. Optionally, a manner of determining the new time-frequency sub-resource is randomly selecting backoff duration, and selecting a time-frequency sub-resource (for example, the 1^{st} time-frequency sub-resource) after the backoff duration. Because a frequency of initiating an access request and a frequency of initiating a scheduling request by a device in the current communications system are relatively low, when the device 2 sends the access request on the first time-frequency sub-resource, there is a relatively low probability that the access request conflicts with an access request or a scheduling request sent by another device. Therefore, there is a relatively high probability that the device successfully sends the request on the time-frequency sub-resource in the first time-frequency resource. Even in a conflict case, the device 2 may still determine, for one or more times, a new time-frequency sub-resource for sending the access request, and send the access request.

Step 503: The device 1 sends an access response on a second time-frequency resource.

Optionally, the second time-frequency resource is determined based on the first time-frequency sub-resource. After receiving the access request sent by the device 2 on the first time-frequency sub-resource, the device 1 may determine, based on the first time-frequency sub-resource, the second time-frequency resource used to send the access response. In this embodiment of this application, an acknowledgment resource corresponding to each time-frequency sub-resource in the first time-frequency resource may be predefined in a standard or a protocol, or preconfigured by the primary node. After receiving the access request on the first time-frequency sub-resource, the device 1 may determine, based on the definition in the standard or the protocol or configuration of the primary node, the acknowledgment resource corresponding to the first time-frequency sub-resource as the second time-frequency resource. In addition, when sending the access request on the first time-frequency sub-resource, the device 2 may also determine, according to a same rule (the rule used by the device 1), the second time-frequency resource corresponding to the first time-frequency sub-resource, and attempt to receive the access response on the second time-frequency resource. For a manner of predefining the acknowledgment resource corresponding to each time-frequency sub-resource in the first time-frequency resource in the standard or the protocol or preconfiguring, by the primary node, the acknowledgment resource corresponding to each time-frequency sub-resource in the first time-frequency resource, correspondingly refer to the manner of predefining the first time-frequency resource in the standard or the protocol or preconfiguring, by the primary node, the first time-frequency resource. Details are not described herein in this embodiment of this application again.

Optionally, the access response includes a second identity.

Step 504: The device 2 determines a second time-frequency sub-resource.

The second time-frequency sub-resource belongs to the first time-frequency resource. The second time-frequency sub-resource may be the same as or different from the first time-frequency sub-resource. For a process in which the device 2 determines the second time-frequency sub-resource, refer to the process in which the target device determines the first time-frequency sub-resource in step 301. Details are not described herein in this embodiment of this application again.

Step 505: The device 2 sends a scheduling request on the second time-frequency sub-resource.

The scheduling request is used to request a time-frequency resource used to transmit service data and/or control information from the device 1. Optionally, the scheduling request includes the second identity. The second identity is used to indicate that the device 2 is a secondary node of the device 1, and the second identity is used to uniquely identify the device 2 in a communications domain in which the device 1 and the device 2 are located.

In this embodiment of this application, the device 1 attempts to receive the request on each time-frequency sub-resource of the first time-frequency resource. The device 2 sends the scheduling request on the second time-frequency sub-resource, and the device 1 may receive the scheduling request on the second time-frequency sub-resource. Optionally, the second time-frequency sub-resource is any time-frequency sub-resource in the first time-frequency resource. The device 2 sends the scheduling request on the second time-frequency sub-resource in a contention manner. For a process in which the device 2 sends the scheduling request on the second time-frequency sub-resource in a contention manner, refer to the process in which the device 2 sends the access request on the first time-frequency sub-resource in a contention manner in step 502. Details are not described herein in this embodiment of this application again.

Step 506: The device 1 sends a scheduling response on a third time-frequency resource.

The scheduling response includes configuration information of a fourth time-frequency resource, and the fourth time-frequency resource is used to transmit service data and/or control information. For an explanation of the configuration information of the fourth time-frequency resource, refer to the explanation of the configuration information of the first time-frequency resource in step 301. Details are not described herein in this embodiment of this application again. Optionally, the scheduling response further includes the second identity. Because the device 1 may receive access requests and/or scheduling requests sent by a plurality of devices, a second identity is carried in the scheduling response, to indicate that the response is a response to the scheduling request and that the response is a response to a scheduling request sent by a specific device. For example, if the scheduling response carries the second identity corresponding to the device 2, it may indicate that the scheduling response is a response to the scheduling request sent by the device 2.

Optionally, the third time-frequency resource is determined based on the second time-frequency sub-resource; alternatively, the third time-frequency resource is determined based on the second time-frequency sub-resource and a type of the scheduling request. The type of the scheduling request is used to indicate specific content that needs to be transmitted on a scheduling request resource requested by the scheduling request. For example, the type of the scheduling request is used to indicate to transmit service data or control information; alternatively, the type of the scheduling request is used to indicate a specific type of the transmitted control information, including but not limited to a service change instruction, an MCS change instruction, scheduling signaling, or channel quality indication information.

In an implementation, the third time-frequency resource is determined based on the second time-frequency sub-resource. After receiving the scheduling request sent by the device 2 on the second time-frequency sub-resource, the device 1 may determine, based on the second time-frequency sub-resource, the third time-frequency resource used to send the scheduling response. In this embodiment of this application, an acknowledgment resource corresponding to each time-frequency sub-resource in the first time-frequency resource may be predefined in a standard or a protocol, or preconfigured by the primary node. After receiving the scheduling request on the second time-frequency sub-resource, the device 1 may determine, based on the definition in the standard or the protocol or configuration of the primary node, the acknowledgment resource corresponding to the second time-frequency sub-resource as the third time-frequency resource. In addition, when sending the scheduling request on the second time-frequency sub-resource, the device 2 may also determine, according to a same rule (the rule used by the device 1), the third time-frequency resource corresponding to the second time-frequency sub-resource, and attempt to receive the scheduling response on the third time-frequency resource. For a manner of predefining the acknowledgment resource corresponding to each time-frequency sub-resource in the first time-frequency resource in the standard or the protocol or preconfiguring, by the primary node, the acknowledgment resource corresponding to each time-frequency sub-resource in the first time-frequency resource, correspondingly refer to the manner of predefining the first time-frequency resource in the standard or the protocol or preconfiguring, by the primary node, the first time-frequency resource. Details are not described herein in this embodiment of this application again.

In another implementation, the third time-frequency resource is determined based on the second time-frequency sub-resource and a scheduling type of the scheduling request. Because processing times needed for scheduling responses of different scheduling types and quantities of resources needed for transmitting the scheduling responses may be different, acknowledgment resources that need to be used to transmit the scheduling responses of the different scheduling types are also different. Therefore, in this embodiment of this application, the third time-frequency resource may be determined based on the second time-frequency sub-resource and the scheduling type of the scheduling request. After receiving the scheduling request sent by the device 2 on the second time-frequency sub-resource, the device 1 may determine, based on the second time-frequency sub-resource and the type of the scheduling request, the third time-frequency resource used to send the scheduling response. In this embodiment of this application, the acknowledgment resource corresponding to each time-frequency sub-resource in the first time-frequency resource may be predefined in a standard or a protocol, or may be preconfigured by the primary node. One time-frequency sub-resource corresponds to one or more acknowledgment resources. When one time-frequency sub-resource corresponds to a plurality of acknowledgment resources, a request type corresponding to each acknowledgment resource may be predefined in a standard or protocol, or may be preconfigured by the primary node. For example, an acknowledgment resource 1 corresponds to an access request, an acknowledgment resource 2 corresponds to a scheduling request 1, an acknowledgment resource 3 corresponds to a scheduling request 2, and the scheduling request 1 and the scheduling request 2 have different types. After receiving the scheduling request on the second time-frequency sub-resource, the device 1 may determine, based on the definition in the standard or the protocol or the configuration of the primary node, that an acknowledgment resource corresponding to the second time-frequency sub-resource and the type of the scheduling request is the third time-frequency resource. In addition, when sending the scheduling request on the second time-frequency sub-resource, the device 2 may also determine, according to a same rule (the rule used by the device 1), the third time-frequency resource corresponding to the second time-frequency sub-resource, and attempt to receive the scheduling response on the third time-frequency resource.

In this embodiment of this application, a plurality of devices send an access request and/or a scheduling request to a primary node in a communications domain by contending for using a time-frequency sub-resource in a same time-frequency resource. Compared with a manner in which a device uses different time-frequency resources to send an access request and a scheduling request respectively, and different devices use different time-frequency resources to send scheduling requests, the solution in this embodiment improves time-frequency resource utilization. In addition, there is no need to separately design different time-frequency resources for the access request and the scheduling request, simplifying a communications mechanism

In a second optional embodiment of this application, the target device is the secondary node in the communications system, and the first request is the scheduling request. FIG. 6 is a schematic flowchart of still another communications method according to an embodiment of this application. A communications system to which the method is applied includes at least a device 3 and a device 4, where the device 3 is a primary node, and the device 4 is a secondary node. For example, the device 3 may be the first device 110 in the communications system shown in FIG. 1, and the device 4 may be the second device 120 in the communications system shown in FIG. 1. Alternatively, the device 3 may be the CDC 101 in the communications system shown in FIG. 2, and the device 4 may be the microphone 102 in the communications system shown in FIG. 2. The method may be specifically used to perform the method shown in the embodiment corresponding to FIG. 3. For example, the device 3 may be the first device, and the device 4 may be the target device. As shown in FIG. 6, the method includes the following steps.

Step 601: The device 4 determines a first time-frequency sub-resource.

For a process in which the device 2 determines the first time-frequency sub-resource, refer to the process in which the target device determines the first time-frequency sub-resource in step 301. Details are not described herein in this embodiment of this application again.

Step 602: The device 4 sends a scheduling request on the first time-frequency sub-resource.

For an explanation of this step, refer to the explanation of step 505. Details are not described herein in this embodiment of this application again.

Step 603: The device 3 sends a scheduling response on a third time-frequency resource.

For an explanation of this step, refer to the explanation of step 506. Details are not described herein in this embodiment of this application again.

In conclusion, according to the communications method provided in this embodiment of this application, a same time-frequency resource is used to carry an access request and a scheduling request of one or more devices. Compared with a manner in which a device sends an access request and a scheduling request by using different time-frequency resources, the solution in which the device sends the access request and/or the scheduling request by reusing a same time-frequency resource improves time-frequency resource utilization. Compared with a manner in which different devices send scheduling requests by using different time-frequency resources, the solution in which a plurality of devices send scheduling requests by reusing a same time-frequency resource improves time-frequency resource utilization. In addition, the plurality of devices contend for using a time-frequency sub-resource in a same time-frequency resource, so that there is no need to separately design different time-frequency resources for an access request and a scheduling request corresponding to each device. This simplifies a communications mechanism

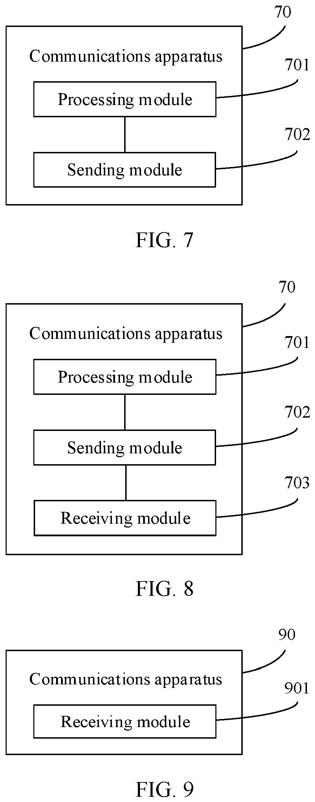

FIG. 7 is a schematic diagram of a structure of a communications apparatus according to an embodiment of this application. The apparatus may be applied to the second device 120 or the third device 130 in the communications system shown in FIG. 1; alternatively, the apparatus may be a chip or an integrated circuit in the second device 120 or the third device 130. As shown in FIG. 7, the apparatus 70 includes:
a processing module 701, configured to determine a first time-frequency sub-resource, where the first time-frequency sub-resource belongs to a first time-frequency resource; and
a sending module 702, configured to send a first request on the first time-frequency sub-resource, where the first request is used to request access or request scheduling.

The first time-frequency resource is a predefined or preconfigured resource used to carry requests of a target device, and the requests of the target device include a request used to request access and a request used to request scheduling. In conclusion, in the communications apparatus provided in this embodiment of this application, compared with a manner in which a target device sends an access request and a scheduling request by using time-frequency sub-resources in different time-frequency resources, the solution in which the target device sends the access request and/or the scheduling request by using a time-frequency sub-resource in the first time-frequency resource determined by the processing module improves time-frequency resource utilization.

Optionally, the first time-frequency resource is used to carry requests of a plurality of target devices.

Optionally, the first request is used to request access, and the first request includes a first identity; and the sending module 702 is further configured to send a second request on a second time-frequency sub-resource, where the second request is used to request scheduling, the second time-frequency sub-resource belongs to the first time-frequency resource, the second request includes a second identity, and the second identity is different from the first identity.

Optionally, as shown in FIG. 8, the apparatus 70 further includes a receiving module 703.

Optionally, the first request is used to request access, and the first request includes the first identity; and the receiving module 703 is configured to receive a broadcast message, where the broadcast message includes information about one or more reserved identities, and the first identity belongs to the one or more reserved identities.

Optionally, the receiving module 703 is configured to receive the broadcast message, where the broadcast message includes configuration information of the first time-frequency resource.

Optionally, the broadcast message is a system message.

Optionally, the first request is used to request access; and the receiving module 703 is configured to receive a target message, where the target message includes information about a second identity, the second identity is carried in a second request, and the second request is used to request scheduling.

Optionally, the target message is an access response, the access response is received by using a second time-frequency resource, and the second time-frequency resource is determined based on the first time-frequency sub-resource.

Optionally, the first request is used to request scheduling; and the receiving module 703 is configured to receive a scheduling response by using a third time-frequency resource, where the scheduling response includes configuration information of a fourth time-frequency resource, and the fourth time-frequency resource is used to transmit service data and/or control information.

Optionally, the third time-frequency resource is determined based on the first time-frequency sub-resource; alternatively, the third time-frequency resource is determined based on the first time-frequency sub-resource and a scheduling type of the first request.

Optionally, the communications apparatus shown in FIG. 7 or FIG. 8 may be applied to the device 2 in the communications method shown in FIG. 5 or the device 4 in the communications method shown in FIG. 6. For a specific operation performed by each module, refer to a related step. For details that are not described herein, refer to the detailed descriptions in the communications method shown in FIG. 5 or FIG. 6. For details, refer to the related descriptions in step 501 and step 502, and step 504 and step 505; or refer to the related descriptions in step 601 and step 602.

In conclusion, in the communications apparatus provided in this embodiment of this application, the target device sends the access request and/or the scheduling request by reusing a first time-frequency resource determined by the processing module. Compared with a manner in which a target device uses different time-frequency resources to send an access request and a scheduling request respectively, the solution in this application improves time-frequency resource utilization. In addition, compared with a manner in which a target device uses different time-frequency resources to send an access request and a scheduling request respectively, and different target devices use different time-frequency resources to send scheduling requests, the solution in which a plurality of target devices send an access request and/or a scheduling request by reusing the first time-frequency resource can improve time-frequency resource utilization.

FIG. 9 is a schematic diagram of a structure of still another communications apparatus according to an embodiment of this application. The apparatus may be applied to the first device 110 in the communications system shown in FIG. 1; alternatively, the apparatus may be a chip or an integrated circuit in the first device 110. As shown in FIG. 9, the apparatus 90 includes:
a receiving module 901, configured to receive a first request on a first time-frequency sub-resource, where the first request is used to request access or request scheduling, and the first time-frequency sub-resource belongs to a first time-frequency resource.

The first time-frequency resource is a predefined or preconfigured resource used to carry requests of a target device, and the requests of the target device include a request used to request access and a request used to request scheduling. In conclusion, in the communications apparatus provided in this embodiment of this application, the target device sends an access request and/or a scheduling request by using a time-frequency sub-resource in the first time-frequency resource. Compared with a manner in which a target device uses time-frequency sub-resources in different time-frequency resources to send an access request and a scheduling request respectively, the solution in this embodiment improves time-frequency resource utilization.

Optionally, the first time-frequency resource is used to carry requests of a plurality of target devices.

Optionally, the first request is used to request access, and the first request includes a first identity; and the receiving module 901 is further configured to receive a second request on a second time-frequency sub-resource, where the second request is used to request scheduling, the second time-frequency sub-resource belongs to the first time-frequency resource, the second request includes a second identity, and the second identity is different from the first identity.

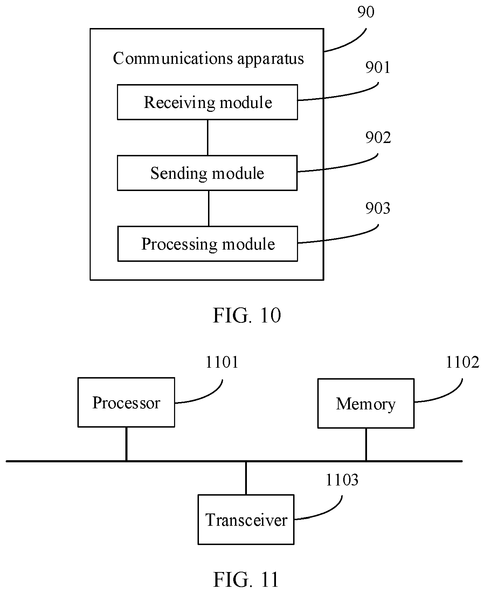

Optionally, as shown in FIG. 10, the apparatus 90 further includes a sending module 902 and a processing module 903.

Optionally, a first request is used to request access, and the first request includes a first identity; and the sending module 902 is configured to send a broadcast message, where the broadcast message includes information about one or more reserved identities, and the first identity belongs to the one or more reserved identities.

Optionally, the sending module 902 is configured to send the broadcast message, where the broadcast message includes configuration information of a first time-frequency resource.

Optionally, the broadcast message is a system message.

Optionally, the first request is used to request access; and the sending module 902 is configured to send a target message, where the target message includes information about the second identity, the second identity is carried in a second request, and the second request is used to request scheduling.

Optionally, the target message is an access response, the access response is sent by using a second time-frequency resource, and the second time-frequency resource is determined based on a first time-frequency sub-resource.

Optionally, the first request is used to request scheduling; the processing module 903 is configured to generate a scheduling response based on the first request; and the sending module 902 is configured to send the scheduling response by using a third time-frequency resource, where the scheduling response includes configuration information of a fourth time-frequency resource, and the fourth time-frequency resource is used to transmit service data and/or control information.

Optionally, the third time-frequency resource is determined based on the first time-frequency sub-resource; alternatively, the third time-frequency resource is determined based on the first time-frequency sub-resource and a scheduling type of the first request.

Optionally, the communications apparatus shown in FIG. 9 or FIG. 10 may be applied to the device 1 in the communications method shown in FIG. 5 or the device 3 in the communications method shown in FIG. 6. For a specific operation performed by each module, refer to a related step. For details that are not described herein, refer to the detailed descriptions in the communications method shown in FIG. 5 or FIG. 6. For details, refer to the related descriptions in step 503 and step 506; or refer to the related descriptions in step 603.

In conclusion, in the communications apparatus provided in this embodiment of this application, the target device sends the access request and/or the scheduling request by reusing a time-frequency sub-resource in the first time-frequency resource. Compared with a manner in which a target device uses different time-frequency resources to send an access request and a scheduling request respectively, the solution in this embodiment improves time-frequency resource utilization. In addition, compared with a manner in which a target device uses different time-frequency resources to send an access request and a scheduling request respectively, and different target devices use different time-frequency resources to send scheduling requests, the solution in which the plurality of target devices send an access request and/or a scheduling request by reusing a time-frequency sub-resource in the first time-frequency resource can improve time-frequency resource utilization.

An embodiment of this application further provides a communications system, including: a first device and a second device. The first device is a primary communications node (for example, the first device 110 in the communications system shown in FIG. 1), and the second device is an external node (for example, the third device 130 in the communications system shown in FIG. 1) or a secondary communications node (for example, the second device 120 in the communications system shown in FIG. 1) in a communications domain.

The first device includes the communications apparatus shown in FIG. 9 or FIG. 10; and the second device includes the communications apparatus shown in FIG. 7 or FIG. 8.

An embodiment of this application provides a communications apparatus, including: at least one processor, at least one memory, and a transceiver.

The memory is configured to store a computer program, where the computer program includes program instructions. The processor is configured to invoke the computer program, and cooperate with the transceiver to perform the communications method shown in FIG. 3, the steps performed by the device 2 in the communications method shown in FIG. 5, or the steps performed by the device 4 in the communications method shown in FIG. 6.

An embodiment of this application further provides a communications apparatus, including: at least one processor, at least one memory, and a transceiver.

The memory is configured to store a computer program, where the computer program includes program instructions. The processor is configured to invoke the computer program, and cooperate with the transceiver to implement the steps performed by the device 1 in the communications method shown in FIG. 5 or the steps performed by the device 3 in the communications method shown in FIG. 6.

For example, FIG. 11 is a block diagram of a communications apparatus according to an embodiment of this application. The communications apparatus may be an external node in a communications system, a primary node in a communications domain in the communications system, or a secondary node in the communications domain in the communications system As shown in FIG. 11, the communications apparatus 1100 includes: a processor 1101, a memory 1102, and a transceiver 1103.

The memory 1102 is configured to store a computer program, where the computer program includes program instructions.

The processor 1101 is configured to invoke the computer program, and cooperate with the transceiver 1103 to implement related steps in the method embodiments. The transceiver is configured to perform sending and receiving steps. The processor is configured to perform other steps than the receiving and sending steps.

The processor 1101 may include one or more processing cores, and the processor 1101 executes various function applications and data processing by running the computer program.

Optionally, the memory 1102 may store an operating system and an application program unit that is needed for at least one function. The operating system may be an operating system such as a real time operating system (Real Time eXecutive, RTX), LINUX, UNIX, WINDOWS, or OS X.

An embodiment of this application further provides another communications apparatus, including: at least one processor and a communications interface. The communications interface is configured to provide input/output for at least one processor. If the communications apparatus is applied to a primary communications node, the processor is configured to execute a program or code to implement the steps performed by the device 1 in the communications method shown in FIG. 5 or the steps performed by the device 3 in the communications method shown in FIG. 6. If the communications apparatus is applied to a secondary communications node or an external node, the processor is configured to execute a program or code to implement the steps performed by the device 2 in the communications method shown in FIG. 5 or the steps performed by the device 4 in the communications method shown in FIG. 6. Optionally, the communications apparatus may be a chip or an integrated circuit. The at least one processor may include a central processing unit (central processing unit, CPU), a network processor (network processor, NP), a digital signal processor (digital signal processor, DSP), or any combination thereof. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

An embodiment of this application further provides a computer storage medium. The computer storage medium stores instructions. When the instructions are executed by a processor of a computer device, the communications method in the method embodiment is implemented.

An embodiment of this application further provides a chip. The chip includes a programmable logic circuit and/or program instructions. When the chip is run, the communications method in the method embodiment is implemented. An embodiment of this application further provides a terminal. The terminal may be a transportation tool or an intelligent device. The transport vehicle may be an unmanned transport vehicle, a vehicle, or an unmanned aerial vehicle, and the intelligent device may be a robot or the like. The terminal includes at least one communications domain (may also be referred to as a cockpit domain). The communication domain includes a primary communication node. Further, the communications domain may further include at least one secondary communications node. The primary communications node includes the communications apparatus shown in FIG. 9 or FIG. 10, and the secondary communications node includes the communications apparatus shown in FIG. 7 or FIG. 8.

For example, a primary communications node in a vehicle is a CDC, and a secondary communications node includes one or more of a microphone, a sound box, and a mobile phone. Alternatively, a primary communications node in a vehicle is a PEPS, and a secondary communications node includes a mobile phone key and/or a car key.

A person of ordinary skill in the art may understand that all or some of the steps of the embodiments may be implemented by hardware or a program instructing related hardware. The program may be stored in a computer-readable storage medium The storage medium may be a read-only memory, a magnetic disk, an optical disc, or the like.

In the embodiments of this application, the terms "first", "second", and "third" are merely used for description, but cannot be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely example embodiments of this application, but are not intended to limit this application. Any modification, equivalent replacement, or improvement made without departing from the spirit and principle of this application should fall within the protection scope of this application.

## Claims

1. A communications method, wherein the method comprises:
determining a first time-frequency sub-resource, wherein the first time-frequency sub-resource belongs to a first time-frequency resource; and
sending a first request on the first time-frequency sub-resource, wherein the first request is used to request access or request scheduling, wherein
the first time-frequency resource is a predefined or preconfigured resource used to carry requests of a target device, and the requests of the target device comprise a request used to request access and a request used to request scheduling.

2. The method according to claim 1, wherein the first time-frequency resource is used to carry requests of a plurality of target devices.

3. The method according to claim 1 or 2, wherein the first request is used to request access, and the first request comprises a first identity; and the method further comprises:
sending a second request on a second time-frequency sub-resource, wherein the second request is used to request scheduling, the second time-frequency sub-resource belongs to the first time-frequency resource, the second request comprises a second identity, and the second identity is different from the first identity.

4. The method according to any one of claims 1 to 3, wherein the first request is used to request access, and the first request comprises the first identity; and the method further comprises:
receiving a broadcast message, wherein the broadcast message comprises information about one or more reserved identities, and the first identity belongs to the one or more reserved identities.

5. The method according to any one of claims 1 to 4, wherein the method further comprises:
receiving a broadcast message, wherein the broadcast message comprises configuration information of the first time-frequency resource.

6. The method according to claim 4 or 5, wherein the broadcast message is a system message.

7. The method according to any one of claims 1 to 6, wherein the first request is used to request access; and the method further comprises:
receiving a target message, wherein the target message comprises information about the second identity, the second identity is carried in the second request, and the second request is used to request scheduling.

8. The method according to claim 7, wherein the target message is an access response, the access response is received by using a second time-frequency resource, and the second time-frequency resource is determined based on the first time-frequency sub-resource.

9. The method according to claim 1 or 2, wherein the first request is used to request scheduling; and the method further comprises:
receiving a scheduling response by using a third time-frequency resource, wherein the scheduling response comprises configuration information of a fourth time-frequency resource, and the fourth time-frequency resource is used to transmit service data and/or control information.

10. The method according to claim 9, wherein the third time-frequency resource is determined based on the first time-frequency sub-resource, or the third time-frequency resource is determined based on the first time-frequency sub-resource and a scheduling type of the first request.

11. A communications method, wherein the method comprises:
receiving a first request on a first time-frequency sub-resource, wherein the first request is used to request access or request scheduling, and the first time-frequency sub-resource belongs to a first time-frequency resource, wherein
the first time-frequency resource is a predefined or preconfigured resource used to carry requests of a target device, and the requests of the target device comprise a request used to request access and a request used to request scheduling.

12. The method according to claim 11, wherein the first time-frequency resource is used to carry requests of a plurality of target devices.

13. The method according to claim 11 or 12, wherein the first request is used to request access, and the first request comprises a first identity; and the method further comprises:
receiving a second request on a second time-frequency sub-resource, wherein the second request is used to request scheduling, the second time-frequency sub-resource belongs to the first time-frequency resource, the second request comprises a second identity, and the second identity is different from the first identity.

14. The method according to any one of claims 11 to 13, wherein the first request is used to request access, and the first request comprises the first identity; and the method further comprises:
sending a broadcast message, wherein the broadcast message comprises information about one or more reserved identities, and the first identity belongs to the one or more reserved identities.

15. The method according to any one of claims 11 to 14, wherein the method further comprises:
sending a broadcast message, wherein the broadcast message comprises configuration information of the first time-frequency resource.

16. The method according to claim 14 or 15, wherein the broadcast message is a system message.

17. The method according to any one of claims 11 to 16, wherein the first request is used to request access; and the method further comprises:
sending a target message, wherein the target message comprises information about the second identity, the second identity is carried in the second request, and the second request is used to request scheduling.

18. The method according to claim 17, wherein the target message is an access response, the access response is sent by using a second time-frequency resource, and the second time-frequency resource is determined based on the first time-frequency sub-resource.

19. The method according to claim 11 or 12, wherein the first request is used to request scheduling; and the method further comprises:
generating a scheduling response based on the first request; and
sending the scheduling response by using a third time-frequency resource, wherein
the scheduling response comprises configuration information of a fourth time-frequency resource, and the fourth time-frequency resource is used to transmit service data and/or control information.

20. The method according to claim 19, wherein the third time-frequency resource is determined based on the first time-frequency sub-resource, or the third time-frequency resource is determined based on the first time-frequency sub-resource and a scheduling type of the first request.

21. A communications apparatus, wherein the apparatus comprises:
a processing module, configured to determine a first time-frequency sub-resource, wherein the first time-frequency sub-resource belongs to a first time-frequency resource; and
a sending module, configured to send a first request on the first time-frequency sub-resource, wherein the first request is used to request access or request scheduling, wherein
the first time-frequency resource is a predefined or preconfigured resource used to carry requests of a target device, and the requests of the target device comprise a request used to request access and a request used to request scheduling.

22. The apparatus according to claim 21, wherein the first time-frequency resource is used to carry requests of a plurality of target devices.

23. The apparatus according to claim 21 or 22, wherein the first request is used to request access, and the first request comprises a first identity; and
the sending module is further configured to send a second request on a second time-frequency sub-resource, wherein the second request is used to request scheduling, the second time-frequency sub-resource belongs to the first time-frequency resource, the second request comprises a second identity, and the second identity is different from the first identity.

24. The apparatus according to any one of claims 21 to 23, wherein the first request is used to request access, and the first request comprises the first identity; and the apparatus further comprises:
a receiving module, configured to receive a broadcast message, wherein the broadcast message comprises information about one or more reserved identities, and the first identity belongs to the one or more reserved identities.

25. The apparatus according to any one of claims 21 to 24, wherein the apparatus further comprises:
the receiving module is configured to receive a broadcast message, wherein the broadcast message comprises configuration information of the first time-frequency resource.

26. The apparatus according to claim 24 or 25, wherein the broadcast message is a system message.

27. The apparatus according to any one of claims 21 to 26, wherein the first request is used to request access; and the apparatus further comprises:
the receiving module is configured to receive a target message, wherein the target message comprises information about the second identity, the second identity is carried in the second request, and the second request is used to request scheduling.

28. The apparatus according to claim 27, wherein the target message is an access response, the access response is received by using a second time-frequency resource, and the second time-frequency resource is determined based on the first time-frequency sub-resource.

29. The apparatus according to claim 21 or 22, wherein the first request is used to request scheduling; and the apparatus further comprises:
the receiving module is configured to receive a scheduling response by using a third time-frequency resource, wherein the scheduling response comprises configuration information of a fourth time-frequency resource, and the fourth time-frequency resource is used to transmit service data and/or control information.

30. The apparatus according to claim 29, wherein the third time-frequency resource is determined based on the first time-frequency sub-resource, or the third time-frequency resource is determined based on the first time-frequency sub-resource and a scheduling type of the first request.

31. A communications apparatus, wherein the apparatus comprises:
a receiving module, configured to receive a first request on a first time-frequency sub-resource, wherein the first request is used to request access or request scheduling, and the first time-frequency sub-resource belongs to a first time-frequency resource, wherein
the first time-frequency resource is a predefined or preconfigured resource used to carry requests of a target device, and the requests of the target device comprise a request used to request access and a request used to request scheduling.

32. The apparatus according to claim 31, wherein the first time-frequency resource is used to carry requests of a plurality of target devices.

33. The apparatus according to claim 31 or 32, wherein the first request is used to request access, and the first request comprises a first identity; and
the receiving module is further configured to receive a second request on a second time-frequency sub-resource, wherein the second request is used to request scheduling, the second time-frequency sub-resource belongs to the first time-frequency resource, the second request comprises a second identity, and the second identity is different from the first identity.

34. The apparatus according to any one of claims 31 to 33, wherein the first request is used to request access, and the first request comprises the first identity; and the apparatus further comprises:
a sending module, configured to send a broadcast message, wherein the broadcast message comprises information about one or more reserved identities, and the first identity belongs to the one or more reserved identities.

35. The apparatus according to any one of claims 31 to 34, wherein the apparatus further comprises:
the sending module is configured to send a broadcast message, wherein the broadcast message comprises configuration information of the first time-frequency resource.

36. The apparatus according to claim 34 or 35, wherein the broadcast message is a system message.

37. The apparatus according to any one of claims 31 to 36, wherein the first request is used to request access; and the apparatus further comprises:
the sending module is configured to send a target message, wherein the target message comprises information about the second identity, the second identity is carried in the second request, and the second request is used to request scheduling.

38. The apparatus according to claim 37, wherein the target message is an access response, the access response is sent by using a second time-frequency resource, and the second time-frequency resource is determined based on the first time-frequency sub-resource.

39. The apparatus according to claim 31 or 32, wherein the first request is used to request scheduling; and the apparatus further comprises:
a processing module, configured to generate a scheduling response based on the first request; and
a sending module, configured to send the scheduling response by using a third time-frequency resource, wherein
the scheduling response comprises configuration information of a fourth time-frequency resource, and the fourth time-frequency resource is used to transmit service data and/or control information.

40. The apparatus according to claim 39, wherein the third time-frequency resource is determined based on the first time-frequency sub-resource, or the third time-frequency resource is determined based on the first time-frequency sub-resource and a scheduling type of the first request.

41. A communications apparatus, comprising: a processor, a memory, and a transceiver, wherein
the memory is configured to store a computer program, and the computer program comprises program instructions; and
the processor is configured to invoke the computer program to implement the communications method according to any one of claims 1 to 10 in collaboration with the transceiver.

42. A communications apparatus, comprising a processor, a memory, and a transceiver, wherein
the memory is configured to store a computer program, and the computer program comprises program instructions; and
the processor is configured to invoke the computer program to implement the communications method according to any one of claims 11 to 20 in collaboration with the transceiver.

43. A communications system, comprising: a first device and a second device, wherein the first device is a primary communications node, and the second device is a secondary communications node or an external node;
the first device comprises the communications apparatus according to any one of claims 31 to 40 or according to claim 42; and
the second device comprises the communications apparatus according to any one of claims 21 to 30 or according to claim 41.

44. A computer storage medium, wherein the computer storage medium stores instructions, and when the instructions are executed by a processor of a computer device, the communications method according to any one of claims 1 to 10 or the communications method according to any one of claims 11 to 20 is implemented.

45. A chip, wherein the chip comprises a programmable logic circuit and/or program instructions, and when the chip is run, the communications method according to any one of claims 1 to 10 or the communications method according to any one of claims 11 to 20 is implemented.
